(19) Europäisches Patentamt
European Patent Office
Office européen des brevets

(11) EP 1 107 667 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**05.10.2022 Patentblatt 2022/40**

(45) Hinweis auf die Patenterteilung:
**12.10.2011 Patentblatt 2011/41**

(21) Anmeldenummer: **99942831.1**

(22) Anmeldetag: **10.08.1999**

(51) Internationale Patentklassifikation (IPC):
***A01N 57/20*** *(2006.01)* *A01N 57/20* *(2006.01)*
*A01N 47/38* *(2006.01)* *A01N 47/36* *(2006.01)*
*A01N 47/30* *(2006.01)* *A01N 43/90* *(2006.01)*
*A01N 43/88* *(2006.01)* *A01N 43/76* *(2006.01)*
*A01N 43/653* *(2006.01)* *A01N 43/50* *(2006.01)*
*A01N 43/40* *(2006.01)* *A01N 43/10* *(2006.01)*
*A01N 37/48* *(2006.01)* *A01N 37/38* *(2006.01)*
*A01N 37/22* *(2006.01)* *A01N 33/18* *(2006.01)*

(52) Gemeinsame Patentklassifikation (CPC):
(C-Sets verfügbar)
**A01N 57/20** (Forts.)

(86) Internationale Anmeldenummer:
**PCT/EP1999/005794**

(87) Internationale Veröffentlichungsnummer:
**WO 2000/008934 (24.02.2000 Gazette 2000/08)**

(54) **HERBIZIDE MITTEL FÜR TOLERANTE ODER RESISTENTE SOJAKULTUREN**

HERBICIDAL AGENTS FOR TOLERANT OR RESISTANT SOYBEAN CROPS

HERBICIDES POUR CULTURES DE SOJA TOLERANTES OU RESISTANTES

(84) Benannte Vertragsstaaten:
**AT BE CH CY DE DK ES FI FR GB GR IE IT LI LU MC NL PT SE**

(30) Priorität: **13.08.1998 DE 19836660**

(43) Veröffentlichungstag der Anmeldung:
**20.06.2001 Patentblatt 2001/25**

(60) Teilanmeldung:
**10010525.3 / 2 329 718**
**10010526.1 / 2 327 305**
**10010527.9 / 2 329 719**
**15000668.2 / 2 904 902**

(73) Patentinhaber: **Bayer CropScience AG
40789 Monheim am Rhein (DE)**

(72) Erfinder:
- **HACKER, Erwin
D-65239 Hochheim (DE)**
- **BIERINGER, Hermann
D-65817 Eppstein (DE)**
- **WILLMS, Lothar
D-65719 Hofheim (DE)**

(74) Vertreter: **König Szynka Tilmann von Renesse
Patentanwälte Partnerschaft mbB Düsseldorf
Mönchenwerther Straße 11
40545 Düsseldorf (DE)**

(56) Entgegenhaltungen:
**WO-A-95/05082 WO-A-96/32013
WO-A-97/36488 WO-A-98/09525
WO-A1-99/45781**

- **DATABASE CROPU [Online] Derwent International 1995 HARVEY R G ET AL: "Soybean herbicide studies." retrieved from STN Database accession no. 1995-89213 XP002127235 & RES.REP.NORTH CENT.WEED SCI.SOC. (51, 338-43, 1994) 1 TAB., Univ.Wisconsin**
- **DATABASE CROPU [Online] Derwent International 1996 HARVEY R G ET AL: "Soybean herbicide studies." retrieved from STN Database accession no. 1996-90386 XP002127236 & RES.REP.NORTH CENT.WEED SCI.SOC. (52, 316-20, 1995) 1 TAB., Univ.Wisconsin**

- DATABASE CROPU [Online] Derwent International 1998 HOVERSTAD T R ET AL: "Herbicide performance in soybeans at Waseca, MN in 1997." retrieved from STN Database accession no. 1998-89754 XP002127237 & RES.REP.NORTH CENT.WEED SCI.SOC. (54, 408-409, 1997) 1 TAB.,
- CHEMICAL ABSTRACTS, vol. 123, no. 11, 11. September 1995 (1995-09-11) Columbus, Ohio, US; abstract no. 135804, SINZAR, BORIVOJE ET AL: "Efficacy of herbicides in soybean crop in southern Banat" XP002127232 & PESTICIDI (1995), VOLUME DATE 1995, 10(1), 35-40 ,1995,
- CHEMICAL ABSTRACTS, vol. 128, no. 7, 16. Februar 1998 (1998-02-16) Columbus, Ohio, US; abstract no. 71922, BEDMAR, FRANCISCO: "Bermudagrass (Cynodon dactylon) control in sunflower (Helianthus annuus), soybean ( Glycine max), and potato (Solanum tuberosum) with postemergence graminicides" XP002127233 & WEED TECHNOL. (1997), 11(4), 683-688 , 1997,
- CHEMICAL ABSTRACTS, vol. 113, no. 7, 13. August 1990 (1990-08-13) Columbus, Ohio, US; abstract no. 54241, MOSELEY, CARROLL M. ET AL: "Reducing herbicide inputs when establishing no-till soybeans (Glycine max)" XP002127234 & WEED TECHNOL. (1990), 4(1), 14-19 ,
- C TOMLIN (ED): "The Pesticide Manual, Tenth Edition" , FARNHAM, GB XP002099499 ISBN: 0-948404-79-5 Seite 1335 -Seite 1341
- DATABASE CROPU [Online] Derwent International 1996 STECKEL G J ET AL: "Weed control in glufosinate tolerant soybeans, Urbana, Illinois, 1995." retrieved from STN Database accession no. 1996-90678 XP002127238 & RES.REP.NORTH CENT.WEED SCI.SOC. (52, 336-38, 1995) 2 TAB., Univ.Illinois
- DATABASE CROPU [Online] Derwent International 1998 JOHNSON W G ET AL: "Weed control programs in glufosinate-tolerant soybean, Columbia, Missouri, 1997." retrieved from STN Database accession no. 1998-88956 XP002127239 & RES.REP.NORTH CENT.WEED SCI.SOC. (54, 234-35, 1997) 1 TAB., Univ.Missouri
- DATABASE CROPU [Online] Derwent International 1998 KAPUSTA G ET AL: "Weed control in glufosinate-resistant soybean with glufosinate, flumiclorac, and V-53482 combinations." retrieved from STN Database accession no. 1998-88957 XP002127240 & RES.REP.NORTH CENT.WEED SCI.SOC. (54, 236-37, 1997) 2 TAB., Univ.Southern-Illinois
- DATABASE CROPU [Online] Derwent Interantional 1996 ANDERSON D D ET AL: "Glufosinate efficacy in transgenic soybeans at Lincoln, NE in 1995." retrieved from STN Database accession no. 1996-90692 XP002127241 & RES.REP.NORTH CENT.WEED SCI.SOC. (52, 360-61, 1995) 1 TAB.,
- DATABASE CROPU [Online] Derwent International 1997 KLAUZER J C ET AL: "1996 Glufosinate/ soybean ( Glycine max) field trials update." retrieved from STN Database accession no. 1997-87701 XP002127242 & PROC.NORTH CENT.WEED SCI.SOC. (51, 138-39, 1996), AgrEvo
- DATABASE CROPU [Online] Derwent International 1995 LUESCHEN W E ET AL: "Weed control with postemergence glyphosate in soybeans at Lamberton, MN in 1994." retrieved from STN Database accession no. 1995-88943 XP002127128 & RES.REP.NORTH CENT.WEED SCI.SOC. (51,268-69, 1995) 1 TAB., Univ.Minnesota
- DATABASE CROPU [Online] Derwent Interataional 1997 MCNAMARA J W ET AL: "Weed control with glyphosate in transgenic soybeans." retrieved from STN Database accession no. 1997-88300 XP002127243 & RES.REP.NORTH CENT.WEED SCI.SOC. (53, 288-90, 1996) 1 TAB., Univ.Nebraska
- ”Weed control systems in glyphosate and glufosinate resistant soybeans"; M L. Buesihger et al, NCWSS Research Report, 1997, 54, Seiten 218-219


(52) Gemeinsame Patentklassifikation (CPC): (Forts.)

C-Sets
**A01N 57/20, A01N 2300/00**

## Beschreibung

Die Erfindung liegt auf dem Gebiet der Pflanzenschutzmittel, die gegen Schadpflanzen in toleranten oder resistenten Kulturen von Soja eingesetzt werden können und als Herbizidwirkstoffe eine Kombination von Herbiziden enthalten.

Mit der Einführung von toleranten oder resistenten Sojasorten und -linien, insbesondere von transgenen Sojasorten und -linien, wird das herkömmliche Unkrautbekämpfungssystem um neue, per se in herkömmlichen Sojasorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen.

Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Synergistische Kombinationen von Glufosinate und Glyphosate mit anderen Herbiziden zur Unkrautbekämpfung in resistenten Sojakulturen sind an sich bekannt, etwa aus WO98/09525 oder WO99/45781.

Überraschenderweise wurde nun gefunden, daß Wirkstoffe aus der Gruppe der genannten breitwirksamen Herbizide (A) in Kombination mit bestimmten Herbiziden (B) in besonders günstiger Weise zusammenwirken, wenn sie in den Sojakulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Sojakulturen, dadurch gekennzeichnet, daß die jeweilige Herbizid-Kombination einen wirksamen Gehalt an

1. (A) einem breitwirksamen Herbizid aus der Gruppe der Verbindungen, welche aus (A1) Verbindungen der Formeln (A1).

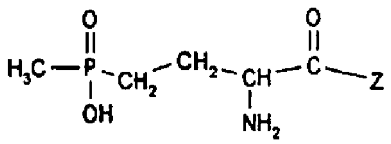

(A1)

worin Z einen Rest der Formel -OH oder einen Peptidrest der Formel - $NHCH(CH_3)CONHCH(CH_3)COOH$ bedeutet, und deren Salzen, vorzugsweise Glufosinate und dessen Salzen mit Säuren und Basen, insbesondere Glufosinate-ammonium, L-Glufosinate oder dessen Salzen, Bialaphos und dessen Salzen mit Säuren und Basen
besteht,
und
2. (B) einem Herbizid aus der Gruppe der Verbindungen, welche aus

(B1) selektiv in Soja gegen monokotyle und überwiegend dikotyle Schadpflanzen wirksamen Herbiziden mit Blattwirkung und/oder Bodenwirkung aus der Gruppe Flumetsulam, und Fluthiamide und/oder
(B2) selektiv in Soja gegen dikotyle Schadpflanzen wirksamen Herbiziden aus der Gruppe Thifensulfuron-methyl und Acifluorfen und/oder
(B3) selektiv in Soja gegen monokotyle Schadpflanzen wirksamen Herbiziden mit Blatt- und Bodenwirkung aus

der Gruppe Clethodim und/oder

(B4) selektiv in Soja gegen monokotyle Schadpflanzen wirksamen Herbiziden mit Blattwirkung aus der Gruppe Quizalofop-P-ethyl, Fenoxaprop-P-ethyl, Fluazifop-P-butyl und Haloxyfop-P-methyl

besteht und die Sojakulturen gegenüber den in der Kombination enthaltenen Herbiziden (A) und (B), gegebenenfalls in Gegenwart von Safenern, tolerant sind.

Neben den erfindungsgemäßen Herbizid-Kombinationen können weitere Pflanzenschutzmittelwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl, 4-hydroxy-6-chlorpyridazin), eine Verbindung der Formel

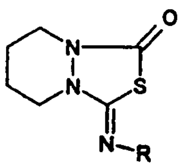

worin R = 4-Chlor-2-fluor-5-(methoxycarbonylmethylthio)-phenyl bedeutet, (bekannt aus US-A-4671819), CGA276854 = 2-Chlor-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl}-benzoesäure-4-oxetanylester (bekannt aus EP-A-496701) enthalten.

Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.

Aus WO-A-92/08353 und EP-A 0 252 237 sind bereits einige Herbizid-Kombinationen mit Glufosinate oder Glyphosate und anderen Herbiziden aus der Sulfonylhamstoffreihe wie Metsulfuron-methyl, Nicosulfuron, Primisulfuron, Rimsulfuron u.a. bekannt.

Die Anwendung der Kombinationen zur Bekämpfung von Schadpflanzen ist in den Druckschriften nur an wenigen Pflanzenspezies oder aber an keinem Beispiel gezeigt worden.

In eigenen Versuchen wurde gefunden, daß überraschenderweise große Unterschiede zwischen der Verwendbarkeit der in WO-A-98/09525 und den anderen Druckschriften erwähnten Herbizid-Kombinationen und auch anderer neuartiger Herbizid-Kombinationen in Pflanzenkulturen bestehen.

Erfindungsgemäß werden Herbizid-Kombinationen bereitgestellt, die in toleranten Sojakulturen besonders

günstig eingesetzt werden können.

Die Verbindungen der Formel (A1) und (A2) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure,
(A1.2) Glufosinate-monoammoniumsalz,
(A1.3) L-Glufosinate, L- oder (2S)-2-Amino-4-(hydroxy(methyl)phosphinyl]-butansäure (Phosphinothricin)
(A1.4) L-Glufosinate-monoammoniumsalz,
(A1.5) Bialaphos (oder Bilanafos), d.h. L-2-Amino-4-[hydroxy(methyl)phosphinyl]-butanoyl-L-alanyl-L-alanin, insbesondere dessen Natriumsalz.

Die genannten Herbizide (A1.1) bis (A1.5) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutern und Ungräsem in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g AS/ha, meist 200 und 2000 g AS/ha (= g a.i./ha = Gramm Aktivstubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe "The Pesticide Manual" 11th Ed., British Crop Protection Council 1997 S. 120-121.
In den erfindungsgemäßen Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit den blattwirksamen Herbiziden (A1) werden zweckmäßig in Sojakulturen eingesetzt, die gegenüber den Verbindungen (A1) resistent oder tolerant sind. Einige tolerante Sojakulturen, die gentechnisch erzeugt wurden, sind bereits bekannt und werden in der Praxis eingesetzt; vgl. Artikel in der Zeitschrift "Zuckerrübe" 47. Jahrgang (1998), S. 217ff.; zur Herstellung transgener Pflanzen, die gegen Glufosinate resistent sind, vgl. EP-A-0242246, EP-A-242236, EP-A-257542, EP-A-275957, EP-A-0513054).

Als Kombinationspartner (B) für die Verbindungen der Formel A1 kommen Verbindungen der Untergruppen (B1) bis (B4) in Frage (im folgenden mit den in Klammer angegebenen bevorzugten Aufwandmengen angegeben), d. h. ein Herbizid aus der Gruppe, welche aus

(B1) selektiv in Soja gegen monokotyle und überwiegend dikotyle Schadpflanzen wirksamen Herbiziden mit Blattwirkung und/oder Bodenwirkung (Residualwirkung), aus der Gruppe

(B1.6) Flumetsulam (PM, S. 573-574) (5 bis 300 g AS/ha, insbesondere 10 bis 100 g AS/ha),
(B1.12) Fluthiamide (BAY FOE 5043, Flufenacet) (PM, S. 82-83) (50 bis 5000 g AS/ha, insbesondere 70 bis 4000 g AS/ha),

und/oder
(B2) selektiv in Soja gegen dikotyle Schadpflanzen wirksamen Herbiziden aus der Gruppe

(B2.3) Thifensulfuron-methyl (PM, S.1188-1190) (1 bis 120 g AS/ha, insbesondere 2 bis 90 g AS/ha), (10 bis 400 g AS/ha, insbesondere 20 bis 300 g AS/ha),
(B2.8) Acifluorfen und dessen Natriumsalz (PM, S. 12-14) (40 bis 800 g AS/ha, insbesondere 60 bis 600 g AS/ha), und/oder

(B3) selektiv in Soja gegen monokotyle Schadpflanzen wirksamen Herbiziden mit Blatt- und Bodenwirkung, aus der Gruppe

(B3.3) Clethodim (PM, S. 250-251) (10 bis 800 g AS/ha, insbesondere 20 bis 600 g AS/ha) und/oder

(B4) selektiv in Soja gegen monokotyle Schadpflanzen wirksamen Herbiziden mit Blattwirkung, aus der Gruppe

(B4.1) Quizalofop-P-ethyl (PM, S. 1089-1092), (10-300 g AS/ha, insbesondere 20-250 g AS/ ha),
(B4.2) Fenoxaprop-P-ethyl (PM, S. 519-520) (10 bis 300 g AS/ha, insbesondere 20 bis 250 g AS/ha),
(B4.3) Fluazifop-P-butyl (PM, S. 556-557) (20 bis 1500 g AS/ha, insbesondere 30 bis 1200 g AS/ha),
(B4.4) Haloxyfop-P-methyl (PM, S. 660-663) (10-300 g AS/ha, insbesondere 20 bis 250 g AS/ha)

Im Falle von Wirkstoffen auf Basis von Carbonsäuren oder anderen salz- oder esterbildenden Wirkstoffen soll die Bezeichnung der Herbizide durch den "common name"der Säure im allgemeinen auch die Salze und Estererfassen, vorzugsweise die handelsüblichen Salze und Ester, insbesondere die gängige Handelsform des Wirkstoffes.
Die Aufwandmengen der Herbizide (B) können von Herbizid zu Herbizid stark variieren (vgl. die Angaben zur Gruppe der Verbindungen (A) und (B). Als grobe Richtgröße können folgende Bereiche gelten:

| | |
|---|---|
| Zu Verbindungen (B1) | 5-5000 g AS/ha, vorzugsweise 10-5000 g AS/ha, |
| Zu Verbindungen (B2): | 1-5000 g AS/ha; vorzusgsweise 1-3000 g AS/ha, |
| Zu Verbindungen (B3): | 10-3000 g AS/ha, vorzugsweise 10-1000 g AS/ha, |
| Zu Verbindungen (B4): | 10-1500 g AS/ha, vorzugsweise 5-500 g AS/ha, |

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 2000:1 bis 1:2000, vorzugsweise 2000:1 bis 1:1000, insbesondere 200:1 bis 1:100,
(A1):(B1) von 400:1 bis 1:500, vorzugsweise von 200:1 bis 1:250, insbesondere von 200:1 bis 1:200, ganz besonders 200:1 bis 1:100
(A1):(B2) von 1500:1 bis 1:200, vorzugsweise 500:1 bis 1:200, insbesondere 200:1 bis 1:100,
(A1):(B3) von 150:1 bis 1:150, vorzugsweise 150:1 bis 1:100, insbesondere 80:1 bis 1:10,
(A1):(B4) von 300:1 bis 1:100, vorzugsweise 300:1 bis 1:30, insbesondere 100:1 bis 1:10,

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.
Zusatzstoffe sind beispielsweise Düngemittel und Farbstoffe.
Bevorzugt sind Herbizid-Kombinationen aus einer Verbindung (A) mit einer Verbindung der Gruppe (B1) oder (B2) oder (B3) oder (B4).
Es sind auch solche Kombinationen erfindungsgemäß, denen noch ein oder mehrere weitere Wirkstoffe anderer Struktur [Wirkstoffe (C)] zugesetzt werden wie

(A) + (B1) + (C), (A) + (B2) + (C), (A) + (B3) + (C) oder (A) + (B4) + (C),
(A) + (B1) + (B2) + (C), (A) + (B1) + (B3) + (C), (A) + (B1) + (B4) + (C),
(A) + (B2) + (B4) + (C), oder (A) + (B3) + (B4) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.
Von besonderem Interesse ist die Anwendung der Kombinationen (A1.1) + (B1.1), (A1.1) + (B1.6), (A1.1) + (B1.8), (A1.1) + (B1.9), (A1.1) + (B1.12), (A1.1) + (B2.3), (A1.1) + (B2.8),
**[0032]** (A1.1) + (B3.3), (A1.1) + (B4.1), (A1.1) + (B4.2), (A1.1) + (B4.3), (A1.1) + (B4.4), (A1.2) + (B1.6), (A1.2) + (B1.12), (A1.2) + (B2.3), (A1.2) + (B2.8), (A1.2) + (B3.3), (A1.2) + (B4.1), (A1.2) + (B4.2), (A1.2) + (B4.3), (A1.2) + (B4.4).
Von besonderem Interesse ist auch die erfindungsgemäße Verwendung der Kombinationen mit dem Herbizid (A1.2) und einem Herbizid, aus der Gruppe, welche aus

(B1') selektiv in Soja gegen monokotyle und überwiegend dikotyle Schadpflanzen wirksamen Herbiziden mit Blattwirkung und/oder Bodenwirkung (Residualwirkung) aus der Gruppe, Flumetsulam, Fluthiamide und/oder
(B2') selektiv in Soja gegen dikotyle Schadpflanzen wirksamen Herbiziden aus der Gruppe und/oder
(B3') selektiv in Soja gegen monodikotyle Schadpflanzen wirksamen Herbiziden mit Blatt- und Bodenwirkung, aus

der Gruppe Clethodim und/oder

(B4') selektiv in Soja gegen monodikotyle Schadpflanzen wirksamen Herbiziden mit Blattwirkung aus der Gruppe Quizalofop-P-ethyl, Fenoxaprop-P-ethyl, Fluazifop-P-butyl, und/oder Haloxyfop-P-methyl.

Bevorzugt sind dabei die Kombinationen aus der jeweiligen Komponente (A) mit einem Herbizid aus der Gruppe (B1'); (B2') oder B3').

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll. Auf der Seite der monokotylen Unkrautarten werden z.B. Echinochloa spp., Setaria spp., Digitaria spp., Brachiaria spp., Panicum spp., Agropyron spp., Wildgetreideformen und Sorghum spp. gut erfaßt, aber auch Alopecurus spp., Avena spp., Apera spica venti, Lolium spp. und Phalaris spp. Cynodon spp., Poa spp. sowie Cyperusarten und Imperata.

Bei dikotylen Unkrautarten erstreckt sich das Wirkungsspektrum auf Arten wie z.B. Chenopodium spp., Amaranthus spp., Abutilon spp., Ipomoea spp., Polygonum spp., Xanthium spp. und Equisetum guterfaßt, aber auch Anthemis spp., Lamium spp., Matricaria spp., Stellaria spp., Kochia spp., Viola spp., Datura spp., Chrysanthemum spp., Thlaspi spp., Pharbitis spp.,Sida spp., Sinapis spp., Cupsella spp., Ambrosia spp., Galium spp., Emex spp., Lamium spp., Papaver spp., Solanum spp., Cirsium spp., Veronica spp., Convolvulus spp., Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zur den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Ölsäure, reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber mono- und dikotylen Unkräutern aufweisen, werden die toleranten bzw. kreuztoleranten Sojapflanzen nur unwesentlich oder gar nicht geschädigt

Darüberhinaus weisen die erfindungsgemäßen Mittel teilweise hervorragende wachstumsregulatorische Eigenschaften bei den Sojapflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Sojakulturen oder noch zu entwickelnden toleranten oder gentechnisch veränderten Sojakulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376. WO 92/14827. WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 32193227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Sojakulturen, dadurch gekennzeichnet, daß man ein Herbizid des Typs (A) mit einem Herbizid des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die

dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen; Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Ges.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder S-A-4,400, 196 sowie Proc. EWRS Symp. "Factors Affecting Herbicidal Activity and Selectivity", 227 - 232 (1988). Weiterhin ist bekannt, daß Alkyl-polyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teiten paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrate wird erhalten aus 15 Gew.-Teilen eines Wirkstoffs/Wirksstoffgemischs, 75 Gew.-Teilen Cyclohexanol als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man 25 Gew.-Teile eines Wirkstoffs/Wirksstoffgemischs,

5 Gew.-Teile 2,2'-dinaphthylmethan-6,6'-disulfonsaures Natrium,

2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflauten der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).

Wenn die beobachteten Wirkungswerte bereits die formale Summe (= $E^A$) der Werte zu den Versuchen mit Einzelapplikationen übertreffen, dann übertreffen sie den Erwartungswert nach Colby (=$E^C$) ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgenem Soja mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Sojapflanzen die Verunkrautung natürlich ein. Die Behandlung mit den erfindungsgemäßen Mitteln und zur Kontrolle separat mit alleiniger Applikation der Komponentenwirkstoffe

erfolgte unter Standardbedingungen mit einem Parzellen-Spritzgerät bei einer Wasseraufwandmenge von 200-300 Liter je Hektar in Parallelversuchen gemäß dem Schema aus Tabelle 1, d. h. im Vorsaat-Vorauflauf, im Nachsaat-Vorauflauf oder im Nachautlauf im frühen, mittleren oder späten Stadium.

Tabelle 1: Anwendungsschema - Beispiele

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A)+(B) | (A)+(B) | | | |
| " | | (A)+(B) | (A)+(B) | | |
| " | (A) | (A)+(B) | | | |
| " | (B) | (A)+(B) | | | |
| " | | | (A)+(B) | (A)+(B) | |
| " | | | (A)+(B) | (A)+(B) | (A)+(B) |
| " | (B) | | (A) | (A)+(B) | |
| " | | (B) | | (A)+(B) | (A)+(B) |
| " | | | | (A)+(B) | (A)+(B) |
| " | | | (A) | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicktung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile, abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby (vgl. Bonitur in Beispiel 1) und weisen deshalb auf einen Synergismus hin. Die Sojapflanzen dagegen wurden infolge der Behandlungen mit den herbiziden Mitteln nicht oder nur unwesentlich geschädigt.

In den nachfolgenden Tabellen allgemein verwendete Abkürzungen:

g AS/ha = Gramm Aktivsubstanz (100 % Wirkstoff) pro Hektar

$E^A$ = Summe der herbiziden Wirkungen der Einzelapplikafionen

$E^C$ = Erwartungswert nach Colby (vgl. Bonitur zu Tabelle 1)

Soja LL = Glufosinate-tolerante Sojakultur

Tabelle 2 : Herbizide Wirkung im Feldversuch in Soja

| Wirkstoff(e) | Dosis [1)] g AS/ha | Herbizide Wirkung [2)] (%) gegen Sorghum sudaneus |
|---|---|---|
| (A1.2) | 500 | 65 |
| | 300 | 15 |

(fortgesetzt)

| Wirkstoff(e) | Dosis 1) g AS/ha | Herbizide Wirkung 2) (%) gegen Sorghum sudaneus |
|---|---|---|
| (B2.8) | 360 | 15 |
| (A1.2) + (B2.8) | 300 + 360 | 70 ($E^A$=30) |
| (B2.3) | 15 | 13 |
| (A1.2) + (B2.3) | 300 + 15 | 33 (E^=30) |
| Abkürzungen zu Tabelle 2:<br>1) = Applikation im 4-Blattstadium 2) = Bonitur 28 Tage nach Applikation<br>(A1.2) = Glufosinate-ammonium (B2.8) = Aciflurofen (B2.3) = Thifensulfuron-methyl | | |

Tabelle 3 : Herbizide Wirkung im Feldversuch in Soja

| Wirkstoff(e) | Dosis 1) | Herbizide Wirkung 2) (%) gegen | |
|---|---|---|---|
| | g AS/ha | Portulace oleracea | Soja LL |
| (B2.3) | 5 | 45 | 3 |
| (A1.2) + (B2.3) | 250 + 5 | 73 ($E^A$=65) | 4 |
| Abkürzungen zu Tabelle 3:<br>1) = Applikation im 8-10-Blattstadium 2) = Bonitur 32 Tage nach Applikation<br>(A1.2) = Glufosinate-ammonium<br>(B2.3) = Thifensulfuron-methyl | | | |

Tabelle 4 : Herbizide Wirkung im Feldversuch in Soja

| Wirkstoff(e) | Dosis 1) | Herbizide Wirkung 2) (%) gegen | |
|---|---|---|---|
| | g AS/ha | Eleusine indica | Soja LL |
| (A1.2) | 500 | 80 | 0 |
| | 200 | 40 | 0 |
| (B4.2) | 25 | 30 | 0 |
| | 50 | 70 | 0 |
| (A1.2) + (B4.2) | 200 + 25 | 83 ($E^A$=70) | 0 |
| (B4.4) | 60 | 45 | 0 |
| (A1.2) + (B4.4) | 200 + 60 | 93 ($E^A$=85) | 0 |
| Abkürzungen zu Tabelle 4:<br>1) = Applikation im 3-Blattstadium 2) = Bonitur 42 Tage nach Applikation<br>(A1.2) = Glufosinate-ammonium (B4.2) = Fenoxaprop-P-ethyl<br>(B4.4) = Haloxyfop-P-methyl | | | |

Tabelle 5: Herbizide Wirkung im Feldversuch in Soja

| Wirkstoff(e) | Dosis 1) g AS/ha | Herbizide Wirkung 2) (%) gegen Abutilon theophrasti |
|---|---|---|
| (A1.2) | 500 | 95 |
| | 330 | 45 |
| (B1.6) | 35 | 52 |

(fortgesetzt)

| Wirkstoff(e) | Dosis [1)] g AS/ha | Herbizide Wirkung [2)] (%) gegen Abutilon theophrasti |
|---|---|---|
| (A1.2) + (B1.6) | 330 + 35 | 99 ($E^A$=92) |
| Abkürzungen zu Tabelle 5: [1)] [2)]<br>= Applikation im 4-Blattstadium = Bonitur 42 Tage nach Applikation<br>(A1.2) = Glufosinate-ammonium<br>(B1.6) = Flumetsulam | | |

**Patentansprüche**

1. Verwendung von Herbizid-Kombinationen zur Bekämpfung von Schadpflanzen in Sojakulturen, **dadurch gekennzeichnet, dass** die jeweilige Herbizid-Kombination einen wirksamen Gehalt an

(A) einem breitwirksamen Herbizid aus der Gruppe der Verbindungen, welche aus

(A1) Verbindungen der Formel (A1),

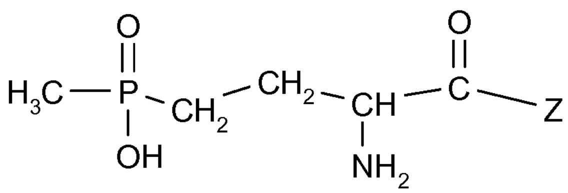

(A1)

worin Z einen Rest der Formel -OH oder einen Peptidrest der Formel $-NHCH(CH_3)CONHCH(CH_3)COOH$ bedeutet, und deren Salzen

besteht,
und
(B) einem Herbizid aus der Gruppe der Verbindungen, welche aus

(B1) selektiv in Soja gegen monokotyle und überwiegend dikotyle Schadpflanzen wirksamen Herbiziden mit Blattwirkung und/oder Bodenwirkung aus der Gruppe Flumetsulam, und Fluthiamide und/oder
(B2) selektiv in Soja gegen dikotyle Schadpflanzen wirksamen Herbiziden aus der Gruppe Thifensulfuron-methyl und und Acifluorfen und/oder
(B3) selektiv in Soja gegen monokotyle Schadpflanzen wirksamen Herbiziden mit Blatt- und Bodenwirkung aus der Gruppe Clethodim und/oder
(B4) selektiv in Soja gegen monokotyle Schadpflanzen wirksamen Herbiziden mit Blattwirkung aus der Gruppe Quizalofop-P-ethyl, Fenoxaprop-P-ethyl, Fluazifop-P-butyl und Haloxyfop-P-methyl

besteht,

aufweist und die Sojakulturen gegenüber den in der Kombination enthaltenen Herbiziden (A) und (B), gegebenenfalls in Gegenwart von Safenern, tolerant sind.

2. Verwendung nach Anspruch 1, **dadurch gekennzeichnet, dass** als Wirkstoff (A) Glufosinate-ammonium eingesetzt wird.

3. Verwendung nach einem der Ansprüche 1 oder 2, **dadurch gekennzeichnet, dass** die Herbizid-Kombination weitere Pflanzenschutzmittelwirkstoffe enthält.

4. Verwendung nach einem der Ansprüche 1 bis 3, **dadurch gekennzeichnet, dass** die Herbizid-Kombinationen im Pflanzenschutz übliche Hilfsstoffen und Formulierungshilfsmittel enthält.

5. Verfahren zur Bekämpfung von Schadpflanzen in toleranten Sojakulturen, **dadurch gekennzeichnet, dass** man die Herbizide der Herbizid-Kombination, definiert gemäß einem oder mehreren der Ansprüche 1 bis 4, gemeinsam oder getrennt im Vorauflauf, Nachauflauf oder im Vor- und Nachauflauf auf die Pflanzen, Pflanzenteile, Pflanzensamen oder die Anbaufläche appliziert.

**Claims**

1. Use of herbicide combinations for controlling harmful plants in soybean crops, wherein the herbicide combination in question has an active content of

(A) a broad-spectrum herbicide from the group of compounds consisting of

(A1) compounds with the formula (A1),

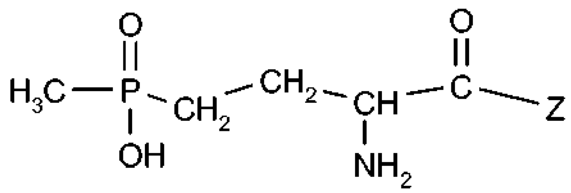

(A1)

wherein Z denotes a residue with the formula -OH or a peptide residue with the formula $-NHCH(CH_3)CONHCH(CH_3)COOH$, and salts thereof,

and
(B) a herbicide from the group of compounds which consists of

(B1) selective herbicides effective on soybeans against monocotyledonous and predominantly dicotyledonous weeds with foliar and/or soil action from the flumetsulam group, and fluthiamide and/or
(B2) selective herbicides for use on soybeans against dicotyledonous weeds from the thifensulfuron-methyl and acifluorfen group and/or
(B3) selective herbicides for use on soybeans against monocotyledonous weeds with foliar and soil action from the clethodim group and/or
(B4) selective herbicides for use on monocotyledonous weeds with foliar action from the quizalofop-P-ethyl, fenoxaprop-P-ethyl, fluazifop-P-butyl and haloxyfop-P-methyl group,

and the soybean crops are tolerant to the herbicides (A) and (B) contained in the combination, if appropriate in the presence of safeners.

2. Use according to Claim 1, **characterized in that** glufosinate-ammonium is employed as active ingredient (A).

3. Use according to one of Claims 1 or 2, wherein the herbicide combination contains other crop protective active ingredients.

4. Use according to one of Claims 1 to 3, wherein the herbicide combinations contain additives and formulation auxiliaries conventionally used in crop protection.

5. Method for controlling harmful plants in tolerant soybean crops, **characterized in that** the herbicides of the herbicide combination, defined according to one or more of claims 1 to 4, are applied to the plants, plant parts, plant seeds or the crop area jointly or separately, pre-emergence, post-emergence or in pre-emergence and post-emergence.

**Revendications**

1. Utilisation d'associations d'herbicides pour la lutte contre les plantes nuisibles dans des cultures de soja, **caractérisée en ce que** chaque combinaison d'herbicides a une teneur active en

(A) un herbicide à large spectre d'action choisi parmi le groupe de composés constitué par (A1) les composés de formule (A1),

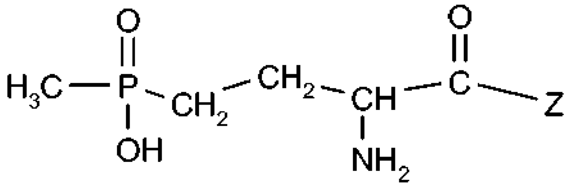

(A1)

dans laquelle Z représente un résidu de formule -OH ou un résidu peptidique de formule $-NHCH(CH_3)CONHCH(CH_3)COOH$, et leurs sels,
et
(B) un herbicide choisi parmi le groupe de composés qui est constitué par

(B1) des herbicides sélectivement actifs chez le soja contre les plantes nuisibles monocotylédones et principalement dicotylédones avec une action foliaire et/ou racinaire, du groupe du flumetsulam et du fluthiamide et/ou
(B2), des herbicides sélectivement actifs chez le soja contre les plantes nuisibles dicotylédones, du groupe thifensulfuro-méthyl et et acifluorfen, et/ou
(B3) des herbicides sélectivement actifs chez le soja contre les plantes nuisibles monocotylédones avec une action foliaire et racinaire, du groupe cléthodime et/ou
(B4) des herbicides, sélectivement actifs chez le soja contre les plantes nuisibles monocotylédones, avec une action foliaire, du groupe quizalofop-P-éthyl, fénoxaprop-P-éthyl, fluazifop-P-butyl et haloxyfop-P-méthyl, et les cultures de soja sont tolérantes aux herbicides (A) et (B) contenus dans la combinaison, éventuellement en présence de phytoprotecteurs.

2. Utilisation selon la revendication 1, **caractérisée en ce que** l'on utilise comme substance active (A) du glufosinate-ammonium.

3. Utilisation selon l'une des revendications 1 ou 2, **caractérisée en ce que** l'association d'herbicides contient d'autres substances actives phytosanitaires.

4. Utilisation selon l'une des revendications 1 à 3, **caractérisée en ce que** les combinaisons d'herbicides contiennent des excipients et des auxiliaires de formulation usuels dans la protection des plantes.

5. Procédé pour la lutte contre les plantes nuisibles dans des cultures de soja tolérantes, **caractérisé en ce que** l'on applique l'herbicide de l'association d'herbicides définie selon une ou plusieurs des revendications 1 à 4, ensemble ou séparément, en pré-levée, en post-levée ou en pré- et post-levée sur les plantes, des parties de plantes, les semences de plantes ou la surface cultivée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9809525 A
- WO 9945781 A
- US 4671819 A
- US 5183492 A
- EP 496701 A
- DE 2856260 A
- WO 9208353 A
- EP 0252237 A
- EP 0242246 A
- EP 242236 A
- EP 257542 A
- EP 275957 A
- EP 0513054 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- EP 4400196 A
- EP 0502014 A


### In der Beschreibung aufgeführte Nicht-Patentliteratur


- The Pesticide Manual. British Crop Protection Council, 1997, 643-645
- The Pesticide Manual. British Crop Protection Council, 1997, 120-121
- Zuckerrübe. Jahrgang. 1998, vol. 47, 217ff
- **SAMBROOK et al.** Molecular Cloning, A Laboratory Manual. Cold Spring Harbor Laboratory Press, 1989, vol. 2
- **WINNACKER.** Gene und Klone. VCH Weinheim, 1996, vol. 2
- **CHRISTOU.** *Trends in Plant Science,* 1996, vol. 1, 423-431
- **BRAUN et al.** *EMBO J.,* 1992, vol. 11, 32193227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLE.** Chemische Technologie. C. Hauser Verlag, 1986, vol. 7
- **VAN VALKENBURG.** Pesticide Formulations. Marcel Dekker, 1973
- **K MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- Solvents Guide. Interscience, 1950
- Detergents and Emulsifiers Annual. McCutcheon's. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- **WINNACKER-KÜCHLER.** Chemische Technologie. C. Hauser Verlag, 1986, vol. 7
- Factors Affecting Herbicidal Activity and Selectivity. *Proc. EWRS Symp.,* 1988, 227-232
- **S. R. COLBY.** *Weeds,* 1967, vol. 15, 20-22